# EUROPEAN PATENT SPECIFICATION

(11) **EP 4 099 176 B1**
(45) Date of publication and mention of the grant of the patent: **02.10.2024**
(21) Application number: 22176255.2
(22) Date of filing: 30.05.2022
(51) Int. Cl.: G06F 13/40, G06F 13/28, G06F 13/12

(54) **SEMICONDUCTOR DEVICE**
HALBLEITERBAUELEMENT
DISPOSITIF SEMICONDUCTEUR

(30) Priority: 02.06.2021 JP 2021093165
(43) Date of publication of application: 07.12.2022
(73) Proprietor: Renesas Electronics Corporation, Tokyo 135-0061 (JP)
(72) Inventor: MURASE, Yashushi, Tokyo, 135-0061 (JP)
(74) Representative: Betten & Resch

(56) References cited:
- WO-A1-2017/027169
- US-A- 4 958 302
- US-A1- 2006 206 633

## Description

### BACKGROUND

The present invention relates to a semiconductor device.

Microcontroller units (MCUs: Micro Controller Unit) are applied in all fields, for example, in the field of applications. In many cases, the MCU requires functions such as data transfer and data reduction. For example, in a situation where data transfer and data reduction are periodically performed, it is necessary to perform data transfer and data reduction in which the acquired data is made usable at high speed.

In the MCU, for example, a processor such as a CPU (Central Processing Unit), control such as data transfer to the main memory (RAM or the like) is performed. Here, it is assumed that data stored in a register provided as a peripheral function in the MCU is transferred to the main memory.

The CPU designates a predetermined address of the register and reads data from the designated address via the bus as transfer data. Then, the CPU specifies an arbitrary address of the main memory and writes the read data to the specified address. The CPU thus transfers data from the register to the main memory. Data reduction is performed after the read data is written to the main memory.

Further, data transfer may be performed by, for example, a DMA (Direct Memory Access) controller shown in Patent Document 1 or a DTC (Data Transfer Controller) controller shown in Patent Document 2. For example, DMA/DTC controller specifies the number of data, the transfer source address (register), the transfer destination address (main memory), the transfer mode, and the like, and transfers data from the transfer source address (register) to the transfer destination address (main memory) via the bus.

There are disclosed techniques listed below.
[Patent Document 1] Japanese Unexamined Patent Application Publication No. 2020-107990
[Patent Document 2] Japanese Unexamined Patent Application Publication No. 1-125644

WO2017/027169 A1 discloses an apparatus for reordering data received from a data stream into a contiguous ordering, has reorder unit that has multiple input buffers and image sensor is configured to generate received data as series of pixels in a non-contiguous order. T

US2006/206633 A1 discloses a method in that data can be accessed as a single contiguous chunk in the address space by assigning the registers to consecutive addresses by use of mirror registers, thus performing single DMA transfer even when the registers are not allocated to consecutive addresses.

US4958302 A discloses a graphics system that uses a programmable tile size and shape supported by a frame buffer memory organization wherein (X, Y) pixel addresses map into regularly offset permutations on groups of RAM address and data line assignments. The system uses a local bus and a DC bus, Z-bus and pixel bus. T

### SUMMARY

However, when the CPU is used, it is necessary to specify a transfer source address and a transfer destination address for each transfer. Further, since the CPU is involved in the data transfer, the data transfer time becomes longer. Also, during data transfer, the CPU cannot perform other processing.

On the other hand, when DMA/DTC is used, the transfer source address and transfer destination address can be specified for each register. However, since it is necessary to perform data reduction using the CPU after data transfer, if the time of data reduction is included, the processing time may be longer than when processing is performed only by the CPU.

It is an object of the present invention to provide a semiconductor device capable of reducing the time required for data transfer and data organizing.

### [Means for Solving the Problems]

A summary of representative ones of the inventions disclosed in the present application will be briefly described as follows. A typical solid state device includes a processor, a memory, an external interface, a register that stores data received by the external interface, a mirror register buffer, and an internal bus coupled to the processor, memory, external interface, registers, and mirror register buffers. The register outputs data to the mirror register buffer without going through the internal bus. The mirror register buffer gives the data input from the register the address in the mirror register buffer different from the address assigned to the register, and transfers the data to the memory without going through the internal bus.

The invention as defined by the appended claims effects to shorten the time required for data transfer and data organizing.

### BRIEF DESCRIPTIONS OF THE DRAWINGS

FIG. 1 is a block diagram showing an example of a semiconductor device according to a first embodiment of the present invention.
FIG. 2 is a diagram specifically illustrating a configuration of a register and data stored in the register.
FIG. 3A is a block diagram showing a configuration example of a mirror register buffer according to a first embodiment of the present invention.
FIG. 3B is a diagram illustrating a configuration of an address setting register and an interrupt setting register in FIG. 3A.
FIG. 3C is a schematic diagram illustrating an exemplary operation of FIG. 3A.
FIG. 4 is a diagram illustrating a specific example of data transfer by the mirror register buffer.
FIG. 5A is a diagram specifically illustrating a data configuration corresponding to FIG 4.
FIG. 5B is a diagram specifically illustrating a data configuration corresponding to FIG 4.
FIG. 5C is a diagram specifically illustrating a data configuration corresponding to FIG 4.
FIG. 6A is a diagram for explaining an application example of data arrangement.
FIG. 6B is a diagram for explaining the application example of data arrangement.
FIG. 7 is a diagram for explaining another application example of data arrangement.
FIG. 8 is a diagram for explaining another application example of data arrangement.
FIG. 9A is a diagram showing a timing chart for contrasting the present embodiment and the comparative example.
FIG. 9B is a diagram showing a timing chart for contrasting the present embodiment and the comparative example.
FIG. 10A is a diagram for contrasting the present embodiment and the comparative example with power consumption.
FIG. 10B is a diagram for contrasting the present embodiment and the comparative example with power consumption.
FIG. 11 is a diagram showing a configuration example of a mirror register buffer according to the second embodiment of the present invention.
FIG. 12, which is not falling under the scope of the claimed invention, is a diagram for explaining a data transfer and data arrangement in the comparative example.
FIG. 13A is a diagram specifically illustrating a data configuration corresponding to FIG. 12.
FIG. 13B is a diagram specifically illustrating a data configuration corresponding to FIG. 12.

### DETAILED DESCRIPTION

Hereinafter, embodiments of the present invention will be described in detail with reference to the drawings. In all the drawings for explaining the embodiments, the same portions are denoted by the same reference numerals in principle, and repetitive descriptions thereof are omitted.

### (First Embodiment)

### <Configuration of Semiconductor Device>

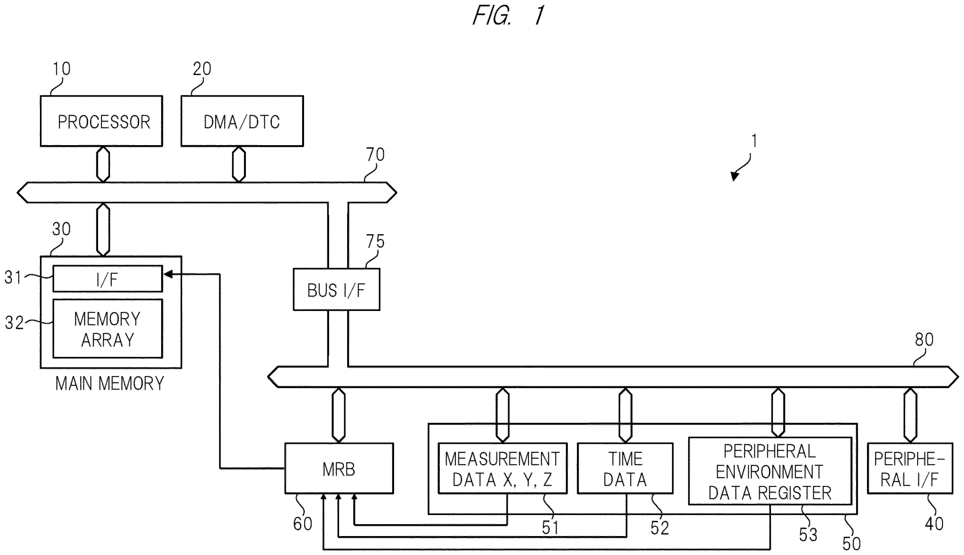

FIG. 1 is a block diagram showing an example of a semiconductor device according to Embodiment 1 of the present invention. As shown in FIG. 1, the semiconductor device 1 includes a processor 10, a DMA/DTC controller 20, a main memory 30, an external interface 40, a register group 50, a mirror register buffer (MRB) 60, a first internal bus 70, a bus interface 75, a second internal bus 80, and the like. An example of the semiconductor device 1 is an MCU or the like.

Processor 10 is an arithmetic processing unit comprising, for example, a CPU. The processor 10 reads data from the register group 50, for example, through the second internal bus 80 and the first internal bus 70. The processor 10 writes the read data to the main memory 30 through the first internal bus 70. In this manner, the processor 10 transfers the data stored in the register group 50 to the main memory 30.

The processor 10 reads and executes various kinds of data including various programs and parameters stored in the main memory 30, for example, to realize a function block that performs various functions such as data transfer by software. The processor 10 may realize a function block in which hardware and software are cooperated, or may realize a part of the function block only by hardware.

DMA/DTC controller 20, instead of the processor 10, transfers data from the register group 50 to the main memory 30 via the second internal bus 80 and the first internal bus 70.

Main memory 30 is a volatile memory such as, for example, SRAM (Static Random Access Memory). The main memory 30 includes an interface 31 and a memory array 32 that holds various data, as shown in FIG. 1. Interface 31 is connected to the first internal bus 70 and the mirror register buffer 60. Processor 10, DMA/DTC controller 20, and mirror register buffer 60 access main memory 30 via interface 31.

The main memory 30 holds data transferred from the register group 50 or the mirror register buffer 60 through the bus (the second internal bus 80 and the first internal bus 70) using the processor 10 or DMA/DTC controller 20 as the master, and data of the register group 50 directly written from the mirror register buffer 60 without going through the bus. The main memory 30 holds various data such as a program, a parameter, and an operation result of the processor 10.

The semiconductor device 1 may include a storage (not shown). Examples of the storage include a non-volatile memory such as a flash memory and a EEPROM. The nonvolatile memory to be used is appropriately selected according to conditions such as capacity. When the storage is provided, a program, parameters, and the like for operating the semiconductor device 1 are stored in the storage.

The first internal bus 70 is coupled to the processor 10, DMA/DTC controllers 20, and the main memory 30. The first internal bus 70 is connected to the second internal bus 80 through a bus interface 75.

The external interface 40, the register group 50, the mirror register buffer 60, the second internal bus 80, and the like constitute a peripheral function in the semiconductor device 1. The external interface 40, register group 50, and mirror register buffer 60 are connected to a second internal bus 80. As described above, the second internal bus 80 is connected to the first internal bus 70 through the bus interface 75.

The external interface 40 is an interface for transmitting and receiving data to and from an external device. The external interface 40 is connected to an external device such as, for example, a measuring device or a sensor. External device transmits the acquired measurement data to the semiconductor device 1. The external interface 40 receives the measurement data transmitted from the external device. The external interface 40 transfers the received measurement data to a predetermined storage area of the register group 50 via the second internal bus 80.

The register group 50 is, for example, a storage device that stores various types of data such as measurement data, time data, and peripheral environment data received from an external device by the external interface 40. The register group 50 includes a different register for each type of data to be stored. For example, the register group 50 includes a measurement data register 51 for storing measurement data, a time data register 52 for storing time data, each register such as a peripheral environment data register 53 for storing the peripheral environment data. Data is written to and read from each register via the second internal bus 80 or the like.

As shown in FIG. 1, each register of the register group 50 is connected to a mirror register buffer 60. The connection between each register and the mirror register will be described in detail later.

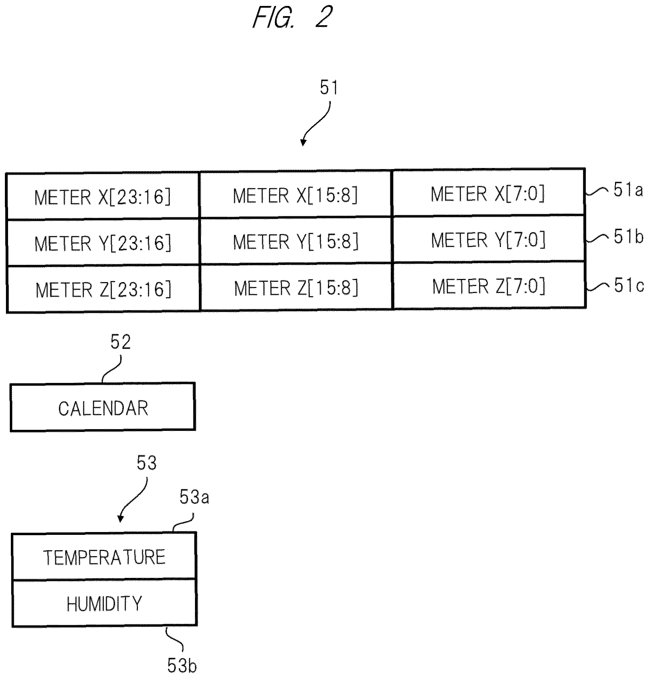

FIG. 2 is a diagram specifically illustrating a configuration of a register and data stored in the register. FIG. 2 shows the measurement data register 51, the time data register 52, and the data stored in the peripheral environment data register 53, respectively.

The measurement data register 51 stores, for example, measurement data of a plurality of measurement devices X, Y, and Z, all of which are not shown. As shown in FIG. 2, the measurement data register 51 stores measurement data (Meter X[23:0]) of the measurement device X, measurement data (Meter Y[23:0]) of the measurement device Y, and measurement data (Meter Z[23:0]) of the measurement device Z.

These measurement data, for example [23:16], [15:8], [7:0], is stored so as to be able to read divided every predetermined number of bits (e.g., 8 bits, 16 bits) . In addition, the measurement data of each measuring instrument is the data measured almost simultaneously. Although only the measurement data measured at a certain time is shown in FIG. 2, the measurement data measured at a subsequent time may be stored in succession.

The measurement data register 51 may include registers 51a, 51b, and 51c corresponding to the measurement devices X, Y, and Z, respectively. In this instance, the register 51a stores the measurement data Meter X[23:0] of the measurement device X. The register 51b stores measurement data (Meter Y[23:0]) of the measurement device Y. The register 51c stores measurement data (Meter Z[23:0]) of the measurement device Z.

The time data register 52 stores the measurement time corresponding to the measurement data stored in the measurement data register 51 as the measurement time data. In FIG. 2, the measurement data is displayed as a Calendar. The measurement time may be the time at which the measurement data is received or the time at which the measurement data is stored in the measurement data register 51. The time data register 52 may store a plurality of clock data.

The peripheral environment data register 53 stores peripheral environment data. The ambient environment data includes, for example, temperature and humidity. The ambient data register 53 stores, for example, temperature data (Temperature) and humidity data (Humidity). The peripheral environment data stored in the peripheral environment data register 53 is data indicating the temperature and the humidity at the measurement time described above.

The peripheral environment data register 53 may include peripheral environment registers 53a and 53b corresponding to the temperature data and the humidity data, respectively. The peripheral environment register 53a stores temperature data. The peripheral environment register 53b stores the humidity data.

### <<Mirror Register Buffer>>

The mirror register buffer 60 is a circuit that adds consecutive addresses to the data stored in the register group 50 and transfers the data to the main memory 30 without passing through the internal bus 70. The data stored in the register group 50 is addressed to a register or a storage area within the register. However, addresses may not be contiguous between registers or within registers. As a result, because the addresses are not consecutive, extra processing is required for data transfer to the main memory 30, which increases the transfer time. If the addresses of the data are not consecutive, data must be sorted so that data can be written to consecutive addresses.

Therefore, in the present embodiment, in the mirror register buffer 60, to add a continuous address, by grouping, so as to reduce the time required for data transfer and data reduction. Further, by providing a circuit for transferring the grouped data to the main memory 30, the data can be directly written from the mirror register buffer 60 to the main memory 30.

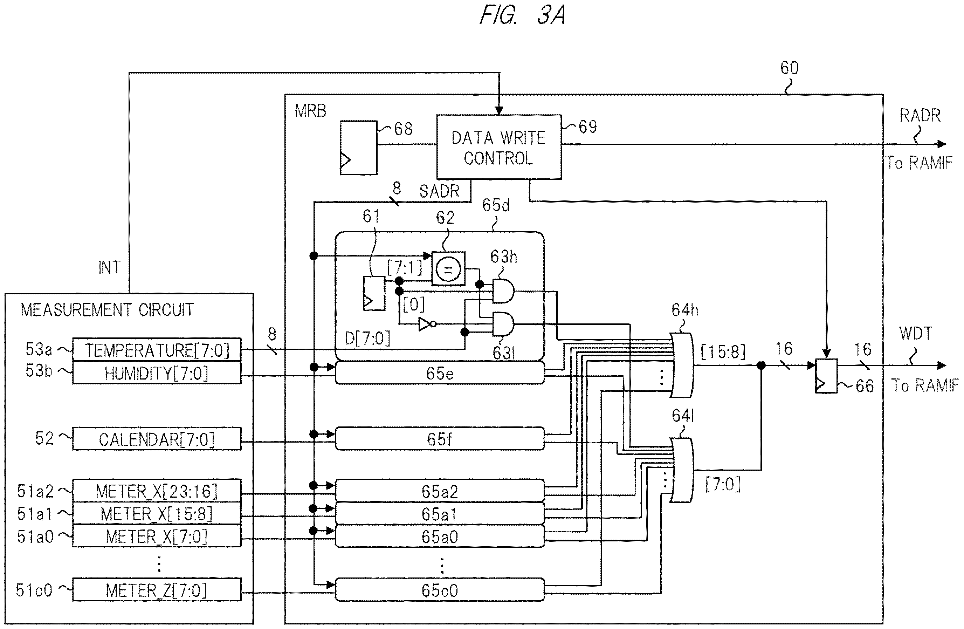

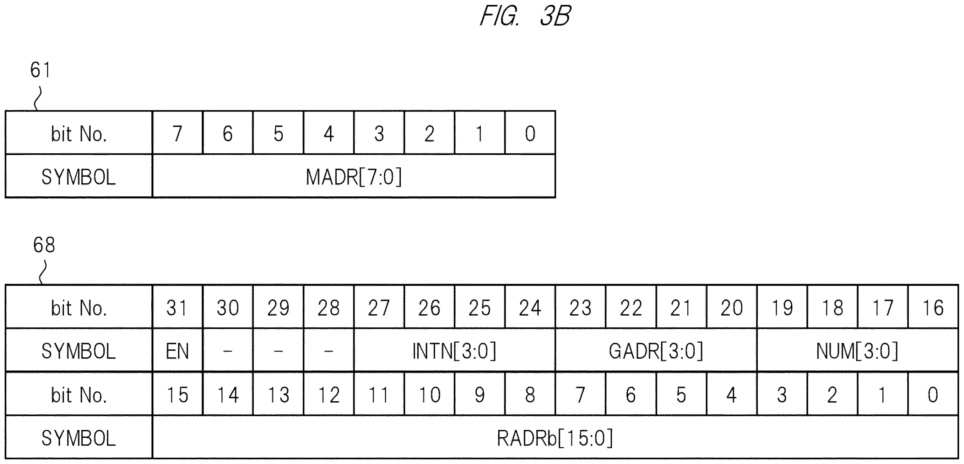

FIG. 3A is a block diagram showing an exemplary configuration of a mirror register buffer according to the first embodiment of the present disclosure. FIG. 3B is a diagram illustrating a configuration of an address setting register and an interrupt setting register in FIG. 3A. FIG. 3A shows a configuration including the mirror register buffer 60 and its periphery. As shown in the drawing 3A, the mirror register buffer 60 includes a plurality of addressing circuits 65 (65a0 to 65a2, ..., 65c0, ..., 65d, 65e, 65f), a data output control circuit 64 (64h, 641), a buffer circuit 66, an interrupt setting register 68, and a data write control circuit 69.

The address assigning circuit 65 is provided corresponding to each register included in the register group 50 of FIG. 2. In this example, the address providing circuits 65a0 to 65a2 are provided corresponding to the measurement data register 51a, and are provided corresponding to the three registers 51a0 to 51a2 in 8-bit units included in the measurement data register 51a, respectively.

Similarly, the address providing circuits 65c0 to 65c2 are provided corresponding to the measurement data register 51c of FIG. 2, and are provided corresponding to the three registers 51c0 to 51c2 in 8-bit units included in the measurement data register 51c, respectively. Note that illustration of 65c1, 65c2, 51c1, and 51c2 is omitted. The addressing circuit 65d, 65e are provided corresponding to the peripheral environment register 53a, 53b of FIG. 2, respectively. The address assigning circuit 65f is provided corresponding to the time data register 52 of FIG. 2.

Each addressing circuit 65, as shown in FIG. 3A, the address setting register 61, the address comparator 62, the data selection circuit 63h, and a 63l. The address setting register 61 is composed of, for example, a flip-flop circuit. The address setting register 61, as shown in FIG. 3B, any mirror register address MADR to be given to the mirror register is set, holds the mirror register address MADR. The mirror register is a register that mirrors the corresponding register, for example a virtual register. As an example, the mirror register virtually included in the address assignment circuit 65d mirrors the peripheral environment register 53a.

The mirror register address MADR set in the address setting register 61, as shown in FIG. 3B, for example, the group address GADR is set to the upper 4 bits ([7:4]), the lower 4 bits ([3:0]) is set to consecutive addresses in the group. In this case, 16 kinds of grouping can be performed, and 16 pieces of data can be allocated to each group.

For example, as illustrated in FIG. 3A, when the peripheral environmental registers 53a and 53b are set to the same group, the same group address GADR may be set to the upper 4 bits of the address setting register 61 in the address assigning circuit 65d and the upper 4 bits of the address setting register 61 in the address assigning circuit 65e. In addition, "0x0" may be set in the lower 4 bits of the address setting register 61 in the address providing circuit 65d, and "0x1" may be set in the lower 4 bits of the address setting register 61 in the address providing circuit 65e. That is, the lower 4 bits of the address setting register 61 may be set to consecutive addresses in the group.

The data write control circuit 69 controls the write destination addresses RADR to the main memories 30 and the write data WDTs based on the setting contents of the interrupt setting register 68 in response to external events, for example, interrupt signals INT from the measurement circuit including the register group 50. External events include reception of server log data in addition to interrupts.

The interrupt setting register 68, as shown in FIG. 3B, the write destination address to the main memory 30, in detail, the start address of the write (base address) RADRb, the group address GADR, the number of data NUM in the group, the interrupt number INTN, and the enable bit EN are set. In this example, the base address RADRb is 16 bits, the group address GADR, the number of data NUM, and the interrupt number INTN are 4 bits each, and the enable bit EN is 1 bit.

When receiving the interrupt signal INT matching the interrupt number INTN, the data write control circuit 69 outputs the base address RADRb to the main memory 30 and outputs, for example, an 8-bit selected address SADR to each address giving circuit 65. At this time, the data write controller 69 sequentially determines the selected address SADR based on the group address GADR and the number of data NUMs in the interrupt setting register 68.

More specifically, the data write controller 69 sets the upper 4 bits to the set value of the group address GADR, and outputs the selected address SADR while sequentially incrementing the lower 4 bits until the set value of the number-of-data-NUM is reached. In response to the increment of the selected address SADR, the data write control circuit 69 sequentially increments the write destination address RADR to the main memory 30 from the base address RADRb.

In FIG. 3A, the write destination address RADR is a byte address, and the write data WDT is a word (16-bit) unit. In this case, the least significant bit ([0]) of the base address RADRb and the write destination address RADR is fixed to "0". The data write controller 69 increments the second bit ([1]) of the write destination address RADR every one cycle of outputting the selected address SADR.

The data width of the write data WDT can be changed as appropriate, for example, 32 bits or 64 bits. For example, when the data width of the write data WDT is a double word (32 bits), the lower 2 bits ([0], [1]) of the base address RADRb and the write destination address RADR are fixed to "0". Further, in FIG. 3A, although one interrupt setting register 68 is shown, in detail, a plurality of events, i.e. corresponding to the interrupt signal INT interrupt number INTN differs, a plurality of interrupt setting registers 68 is provided. Then, for each of the plurality of interrupt setting registers 68, different optional group address GADR and the base address RADRb is set.

In the address assigning circuit 65 illustrated in FIG. 3A, the address comparison circuit 62 compares the mirror register address MADR held by the address setting register 61 with the selected address SADR from the data write control circuit 69. More specifically, the address comparator 62 compares, for example, the upper 7 bits in the 8 bits in the mirror register address MADR with the upper 7 bits in the 8 bits in the selected address SADR. The address comparison circuit 62 outputs a "1" level when the comparison results match, and outputs a "0" level when the comparison results do not match.

Data selection circuit 63h, 63l is composed of, for example, a three-input AND gate. The output from the address comparison circuit 62 and the 8-bit data D[7 : 0] from the corresponding register are input to the data selection circuits 63h and 63l as two inputs among the three inputs. The value of the least significant bit ([0]) of the mirror register address MADR is input to the data selection circuit 63h as the remaining one input among the three inputs, and the inverted value of the least significant bit ([0]) is input to the data selection circuit 63l.

Thus, when the comparison results of the address comparison circuit 62 match, the data selection circuits 63h and 63l select whether to output the 8-bit data D[7 : 0] from the corresponding register to the upper 8 bits or the lower 8 bits of the 16-bit write data WDT based on the values of the least significant bits ([0]) of the mirror register address MADR. Specifically, when the value of the least significant bit ([0]) of the mirror register address MADR is "1" level, the data selection circuit 63h outputs the data D[7 : 0], and when the value of the least significant bit ([0]) is "0" level, the data selection circuit 63l outputs the data D[7 : 0] .

For example, it is assumed that the same group A is set in the address setting register 61 in the address assigning circuits 65d and 65e, the address in the group A in the address assigning circuit 65d is set to "0x0", and the address in the group A in the address assigning circuit 65e is set to "0x1". Further, as the selected address SADR, assume that the group A, and the address "0x0" in the group A is output.

In this case, the data selection circuit 63l in the address assignment circuit 65d outputs 8-bit data of the peripheral environment register 53a, and in parallel, the data selection circuit 63h in the address assignment circuit 65e outputs 8-bit data of the peripheral environment register 53b. If the selected address SADR following "0x0" is output, the selected address SADR becomes "0x2" on the assumption that the least significant bit [0] is fixed to "0" in accordance with the relationship between the byte data and the word data.

Data output control circuit 64h, 64l is composed of, for example, an OR gate. Data output control circuit 64h, the output from the data selecting circuit 63h of the upper bit side in the plurality of addressing circuits 65 is input, substantially, and outputs the output from any one of the data selecting circuit 63h to the subsequent stage. On the other hand, the data output control circuit 64l, the output from the data selection circuit 63l of the lower bit side in the plurality of addressing circuits 65 is input, substantially, the output from any one of the data selection circuit 63l to the subsequent stage.

The buffer circuit 66 is formed of, for example, a flip-flop circuit. The buffer circuit 66 latches a total of 16-bit data with 8-bit data from the data output control circuit 64h as upper bits and 8-bit data from the data output control circuit 64l as lower bits. Then, the buffer circuit 66 outputs the latched 16-bit data as the write data WDT to the main memory 30 in response to a control signal from the data write control circuit 69.

The buffer circuit 66 is provided to temporarily hold transfer data in case of conflicting with access via the first internal bus 70, for example, when data transfer from the mirror register buffer 60 to the main memory 30, i.e., writing of transfer data is performed. That is, by providing the buffer circuit 66, the write timing of transfer data can be shifted, and access to the main memory 30 via the bus and data transfer from the mirror register buffer 60 to the main memory 30 can be performed.

As described above, the addressing circuit 65, by the address setting register 61, the data input from each register in the register group 50 (e.g., the peripheral environment register 53a or the like) is assigned an address in the mirror register buffer different from the address assigned to the register, that is, a mirror register address MADR. The mirror register buffer 60 transfers the data input from the register to the memory 30 without passing through the internal bus. Thus, it is possible to significantly reduce the data transfer time. Also in this embodiment, as in the conventional case, data can be transferred from the register to the main memory 30 via the bus.

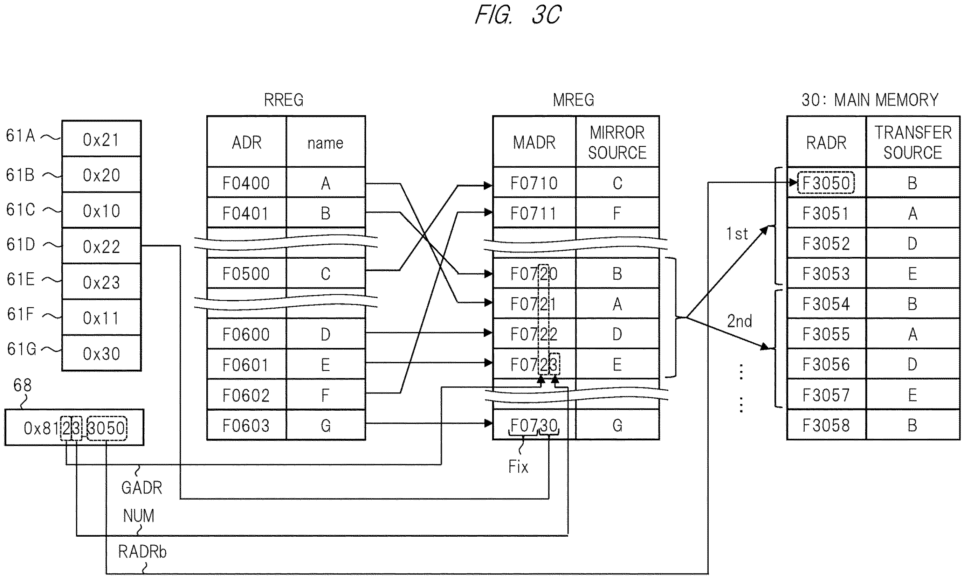

FIG. 3C is a schematic diagram illustrating an exemplary operation of FIG. 3A. FIG. 3C shows an example of a relation between a plurality of address setting register 61A∼61G, an interrupt setting register 68, a real register RREG in the register group 50, a mirror register MREG, and the main memory 30. For convenience of explanation, the number of each of the address setting register 61 and the real register RREG is assumed to be seven.

Address setting register 61A∼61G is included in each of the plurality of addressing circuitry 65 shown in FIG. 3A. Among these, for example, "0x21", "0x20", "0x22" and "0x23" are respectively set in the address setting register 61A, 61B, 61D, 61E. That is, the address setting register 61A, 61B, 61D, 61E, the same group address "0x2" is set.

The actual register RREG corresponds to a plurality of registers in the measurement circuitry shown in FIG. 3A. A predetermined address ADR is assigned to the plurality of registers in advance. Of these, for example, "0xF0400", "0xF0401", "0xF0600", and "0xF0601" are assigned to the registers "A", "B", "D", and "E", respectively. That is, the addresses ADR of registers "A", "B", "D", and "E" may include discontinuous ones.

The address setting register 61A, 61B, 61D, 61E corresponds to registers "A", "B", "D", and "E", respectively. As a result, "0xF0721", "0xF0720", "0xF0722" and "0xF0723" are assigned as mirror register addresses MADR to mirror registers MREG "A", "B", "D" and "E" corresponding to registers "A", "B", "D" and "E", respectively. Incidentally, the portion of the higher 12 bits in the mirror register address MADR "0xF07" is intended to be fixed in advance, the portion of the lower 8 bits is arbitrarily defined by the address setting register 61.

For example, "0x8123-3050" is set in the interrupt setting register 68. In this case, the base address RADRb is "0x3050", the group address ADR is "0x2", the number of data NUM in the group is "3", the interrupt number ININ is "0x1". The setting to the address setting register 61A∼61G and interrupt setting register 68 is performed in advance, for example, by the processor 10 or the like.

When the interrupt signal INT having the interrupt number INTN of "0x1" is generated, the data write control circuit 69 outputs the selected address SADR and the write destination address RADR based on the interrupt setting register 68. In this example, for convenience, the data width of the write data WDT shall be 8 bits for ease of illustration.

In this case, the data write control circuit 69 outputs the selected address SADR "0x20", "0x21", "0x22", and "0x23" in this order over four cycles in the first transfer period (1st) based on the group address ADR and the number of data NUMs in the group. As a result, in the 4 cycles, as the write data WDT, the data of the register "B", "A", "D", and "E" is output in order.

In the four cycles, the data write controller 69 outputs the write destination address RADR "0x3050", "0x3051", "0x3052", and "0x3053" in this order based on the base address RADRb. As a result, the data of the registers "B", "A", "D" and "E" are transferred to the write destination addresses RADR "0x3050", "0x3051", "0x3052" and "0x3053" of the main memory 30, respectively.

Thereafter, the data write control circuit 69, when the interrupt number ININ receives the interrupt signal INT of "0x1" again, in the same manner as in the case of the first transfer period (1st), the second transfer period (2nd) processing to execute. In this case, unlike the case of the first transfer period (1st), the data write control circuit 69 holds "0x3053" which is the last write destination address RADR outputted in the first transfer period (1st), and sets the next address "0x3054" as the base address.

In this manner, the mirror register buffer 60 makes a grouping of a plurality of registers "B", "A", "D", a plurality of data input from "E", by giving the same group address GADR "0x2" and consecutive addresses in the group. In this case, the addresses of the plurality of registers "B", "A", "D", and "E" before grouping may be discontinuous. Then, the mirror register buffer 60, an external event, for example, when the interrupt signal INT is generated, selects a group corresponding to the external event (group address GADR "0x2" group), and transfers the data belonging to the selected group to the main memory 30.

### <<Mirror register buffer operation>>

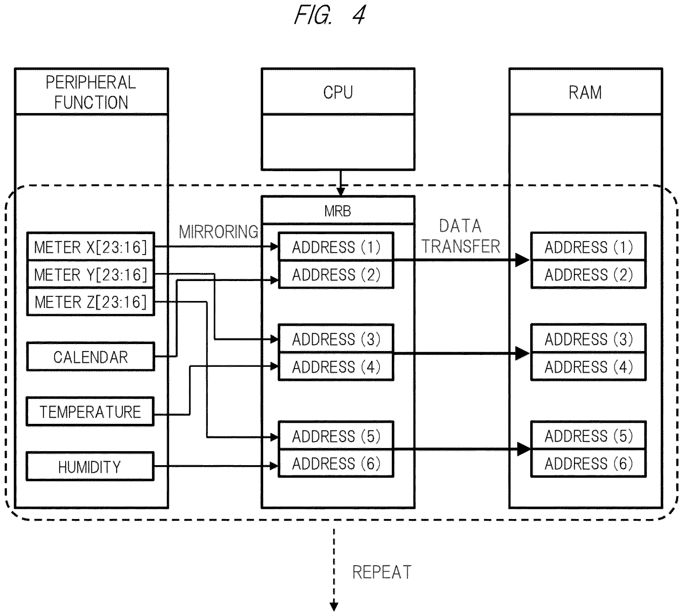

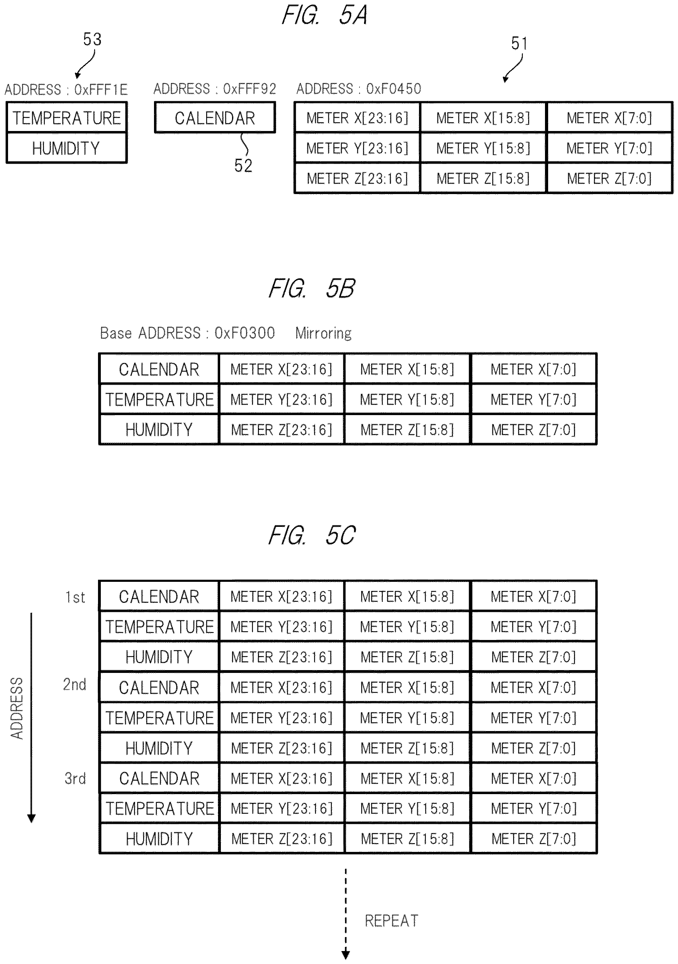

Here, a specific example of data transfer by the mirror register buffer 60. FIG. 4 is a diagram for explaining a specific example of data transfer by the mirror register buffer. FIG. 5 is a diagram specifically showing a data structure corresponding to FIG. 4. FIG. 5A is a diagram showing the data stored in each register before data reduction. FIG. 5B is a diagram showing a data structure organized by grouping. FIG. 5 (c) is a diagram showing a data configuration of the transfer data after transfer to the main memory 30.

First, measurement data (Meter X, Meter Y, Meter Z), timing data (Calendar), temperature data (Temperature), and humidity data (Humidity) of the measurement devices X, Y, and Z are stored in the respective registers. The data stored in the register is given a predetermined address for each register (FIG. 5A).

Then, the mirror register buffer 60, for example, grouping these data (FIG. 5B). Specifically, the mirror register buffer 60, the same group address to the data to be grouped, and by giving consecutive addresses in the group, performs grouping. That is, the address setting register 61 corresponding to the data to be grouped, the same group address, and consecutive mirror register addresses in the group is set. Further, in FIG. 5B, as the start address of these mirror registers (base address), 0xF300 is set fixed.

In the case of FIG. 5B, the measurement data (Meter X) and the timing data (Calendar) are transferred first. Next, the measurement data (Meter Y) and the thermal data (Temperature) are transferred. Next, the measurement data (Meter Z) and the humidity data (Humidity) are transferred.

Specifically, measurement data (Meter X) is written to the address (1) (base address), clock data (Calendar) is written to the address (1) and consecutive addresses (2) (FIG. 4). As a result, the measurement data (Meter X) and the timing data (Calendar) are continuously written in the main memory 30 (FIG. 5C).

Next, measurement data (Meter Y) is written to the address (2) and consecutive addresses (3), temperature data (Temperature) is written to the address (3) and consecutive addresses (4) (FIG. 4) . As a result, the measurement data (Meter X), the time measurement data (Calendar), the measurement data (Meter Y), and the thermal data (Temperature) are continuously written in the main memory 30 (FIG. 5C).

The measurement data (Meter Z) is written to the address (4) and consecutive addresses (5), the humidity data (Humidity) is written to the address (5) and consecutive addresses (6) (FIG. 4) . As a result, the measurement data (Meter X), the time measurement data (Calendar), the measurement data (Meter Y), the temperature data (Temperature), the measurement data (Meter Z), and the humidity data (Humidity) are consecutively written in the main memory 30 (FIG. 5C) .

By repeating these operations, the mirror register buffer 60 continuously writes measurement data and the like measured at different times into the main memory 30 as transfer data (FIG. 5C) .

### <<Application example 1 of data reduction>>

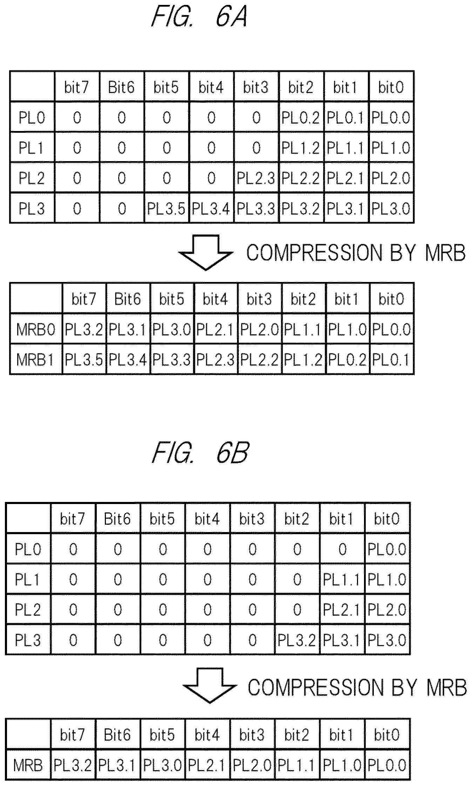

Next, an application example of data reduction will be described. FIG. 6 is a diagram for explaining an application example of data reduction. FIGS. 6A and 6B exemplify a data organizing method in an MCU having different pin numbers. PL0, PL1 in FIG. 6 indicates a register (port latch register) for storing data for each pin. For example, PL0 is a register that stores the data of the port 0, and PL1 is a register that stores the data of the port 1, respectively.

In FIGS. 6A and 6B, a method of organizing data of consecutive ports is shown. The addresses of consecutive port registers are contiguous, but because some of the bits are disabled, the addresses are not contiguous as data. Therefore, in the example of FIG. 6A, the mirror register buffer 60, 4 ports of data are summarized in two times of the transfer data. Further, in the example of FIG. 6B, the mirror register buffer 60, 4 ports of data are summarized in one transfer data.

### <<Application Example 2 of Data Reduction>>

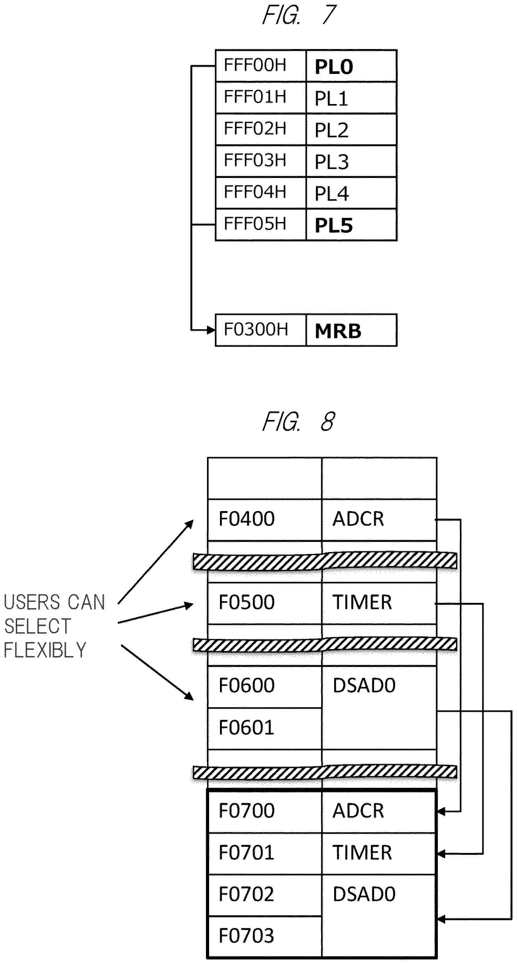

FIG. 7 is a diagram illustrating another application example of data reduction. In FIG. 7, a method for organizing data of a plurality of non-contiguous ports is shown. As shown in FIG. 7, the address of the port 0 and the port 5 registers is discontinuous. That is, the addresses of the registers of the plurality of data before grouping are discontinuous. Therefore, the mirror register buffer 60 generates transfer data collectively and the data of the port 5 and the data of the port 0 separated from each other.

### <<Application Example 3 of Data Reduction>>

FIG. 8 is a diagram for explaining another application example of the data reduction. Here, the case where the user flexibly organizes the data is shown. In FIG. 8, data of the address F0400, F0500, F0600, F0601 is summarized as transfer data. Addressing F0700 ∼F0703 is assigned to the summarized data-to-be-transferred data. Thus, by assigning the data of the remote address to the adjacent address, these data will be written to the consecutive address, and data reduction is facilitated.

### <Main Effects of the Present Embodiment>

According to the present embodiment, the mirror register buffer 60 gives an address in another mirror register buffer than the address assigned to the register to data in the register, and writes the data to which the address is gives as transfer data directly from the mirror register buffer 60 to the main memory 30. At this time, the mirror register buffer 60 writes the grouped data to consecutive addresses in the main memory 30. According to this configuration, it is possible to perform data transfer and data reduction from the register to the main memory 30 in a short time.

In addition, since data is written to consecutive addresses, it is possible to perform data processing efficiently.

### [Comparative Example]

Here, a comparative example with respect to the present embodiment. The comparative example will be described in comparison with the above-described FIG. 4 and FIGS. 5A to 5C.

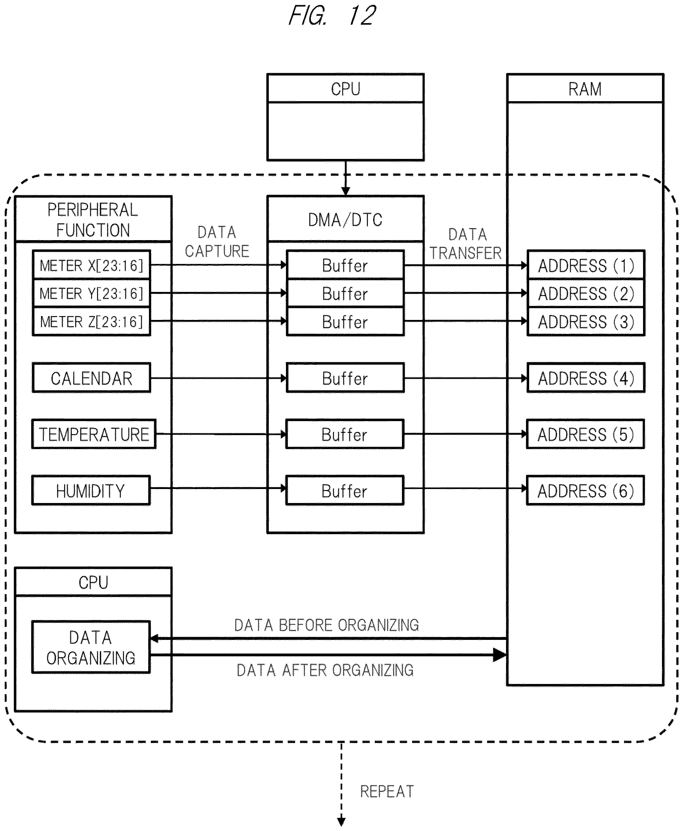

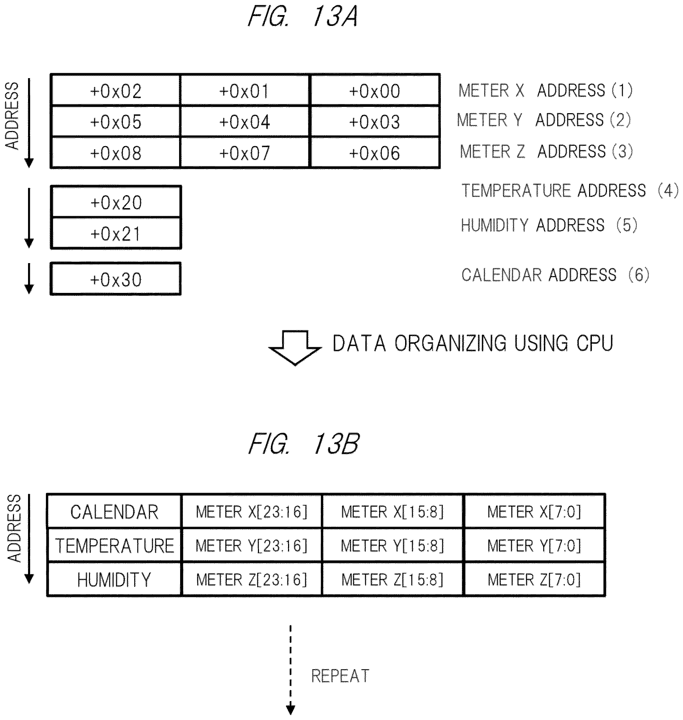

FIG. 12, which is not falling under the scope of the claimed invention, is a diagram for explaining data transfer and data reduction in the comparative example. FIGS. 13A and 13B are diagrams specifically showing a data structure corresponding to FIG. 12. FIG. 13A is a diagram showing a configuration of data written to the main memory before data reduction. FIG. 13B is a diagram showing a data structure after data is organized.

In the comparative example, as shown in FIG. 12, data is transferred from the register to the main memory by DMA/DTC controllers 20. DMA/DTC controller 20 reads the measurement data (Meter X), sets the transfer destination address of the measurement data (Meter X) to the address (1), and transfers to the main memory. Next, DMA/DTC controller 20 reads the measurement data (Meter Y), sets the transfer destination address of the measurement data (Meter Y) to the address (2), and transfers to the main memory. Then, DMA/DTC controller 20 reads out the measurement data (Meter Z), sets the transfer destination address of the measurement data (Meter Z) to the address (3), and transfers it to the main memory (FIG. 12, FIG. 13A) .

Similarly, DMA/DTC controller 20 transfers the temperature data (Temperature) to the address (4), the humidity data (Humidity) to the address (5), and the timing data (Calendar) to the address (6), respectively (FIGS. 12 and 13A).

The processor reads data from the main memory, organizes the read data, and writes the organized data to the main memory (FIGS. 12 and 13B).

As described above, in the comparative example, data is transferred from the register to the main memory, data is read from the memory, data is reorganized, and data is written to the memory, so that data transfer and data reduction take a long time.

### <Comparison between the present embodiment and the comparative example>

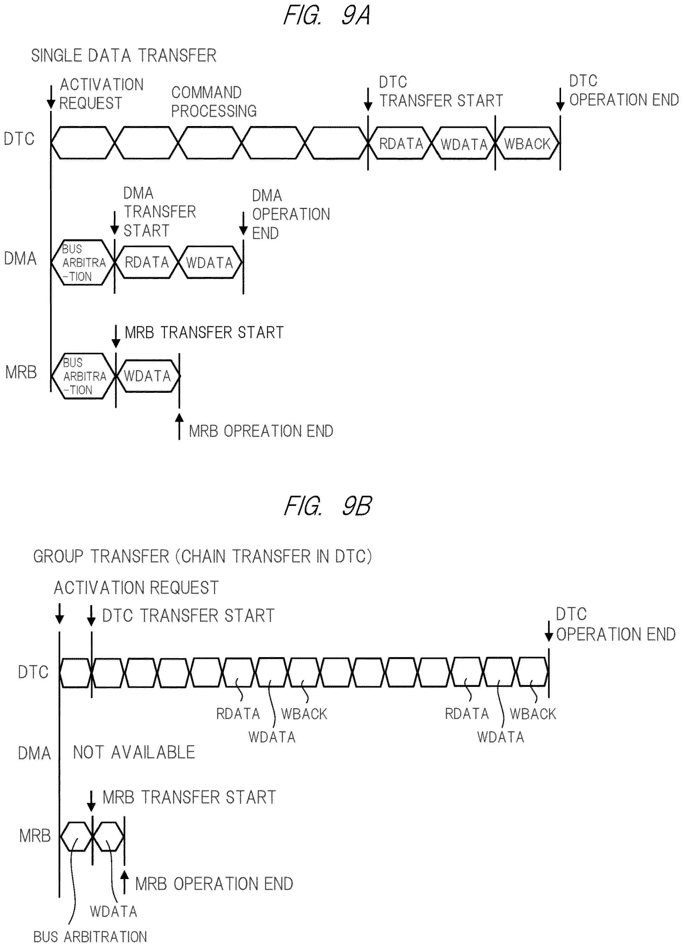

FIG. 9 is a timing chart showing a comparison between the present embodiment and the comparative example. FIG. 9A is a timing chart for comparing the present embodiment with the comparative example in the case where data transfer is performed once. FIG. 9B is a timing chart for comparing the present embodiment with the comparative example in the case where data transfer is performed twice in succession.

In FIG. 9A, when transferring data in the DTC controller, command processing is performed from the activation request to the fifth clock. Then, data is read from the register at the sixth clock, data is written to the main memory at the seventh clock. Then, write-back is performed at the eighth clock. Then, the operation of the DTC controller ends.

In FIG. 9A, when data is transferred by the DMA controller, the command processing of bus arbitration is performed on the first clock. Then, data is read to the second clock, data is written to the main memory to the third clock. Then, the operation of the DMA controller ends.

In FIG. 9A, when transferring data in the mirror register buffer 60, the command processing of bus arbitration is performed on the first clock. Then, the second clock, data is written to the main memory by the mirror register buffer 60. Then, the operation of the mirror register buffer 60 is completed.

Comparing them, the data transfer takes the most time when the DTC controller is used. Further, when using the DMA controller, the data transfer time is only one clock different from the case of using the mirror register buffer 60. However, even if data transfer is performed using the DMA controller, it is necessary to perform data reduction by the processor. Therefore, in consideration of the time until data reduction end, the present embodiment using the mirror register buffer 60, it is possible to end the processing in a very short time.

In the example of FIG. 9B, the time difference required for data transfer is further expanded. When using the mirror register buffer 60, it is possible to transfer a plurality of data in parallel, the data transfer time is the same as in FIG. 9A. Moreover, the DMA controller cannot perform continuous data transfer.

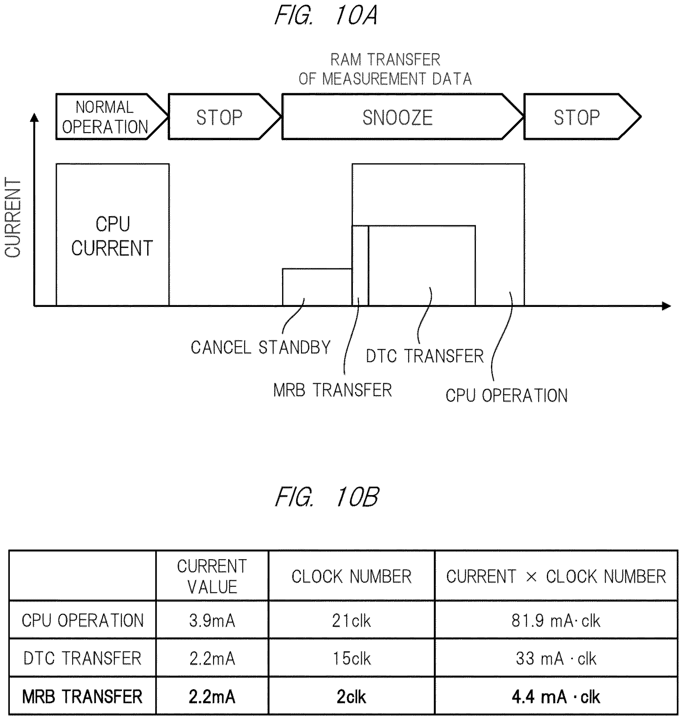

FIG. 10 is a diagram showing a comparison between the present embodiment and the comparative example in terms of power consumption. FIG. 10A shows the operation of the processor and the power consumption in comparison. FIG. 10A illustrates the intermittent operation. FIG. 10B shows the power consumption in FIG. 10A by comparing this embodiment with a comparative example.

In an intermittent operation, the operating mode of the processor switches between a normal mode, a stop mode, and a snooze mode. Snooze mode is a mode in which a processor is not used and only a peripheral function is operated.

In this embodiment using the mirror register buffer 60, after the standby release, data transfer is performed in Snooze mode. However, when the CPU is used, data transfer is performed in normal mode because data transfer cannot be performed in Snooze mode. Further, when using the CPU, the data transfer time is longest.

Therefore, as shown in FIG. 10B, the power consumption required for data transfer is the lowest in the present embodiment, and is the highest in the case where a CPU is used. FIG. 10B is an estimate of the R78 architecture. As described above, the present embodiment is more effective than the prior art from the viewpoint of power consumption.

### (Second Embodiment)

Next, a second embodiment will be described. As mentioned earlier, mirror register buffers can be organized by grouping data in registers. In the first embodiment, data is directly transferred from the mirror register buffer to the main memory 30 without passing through the bus, but in the present embodiment, data from the mirror register buffer is output to the bus in response to access from the processor 10 or DMA/DTC controller 20.

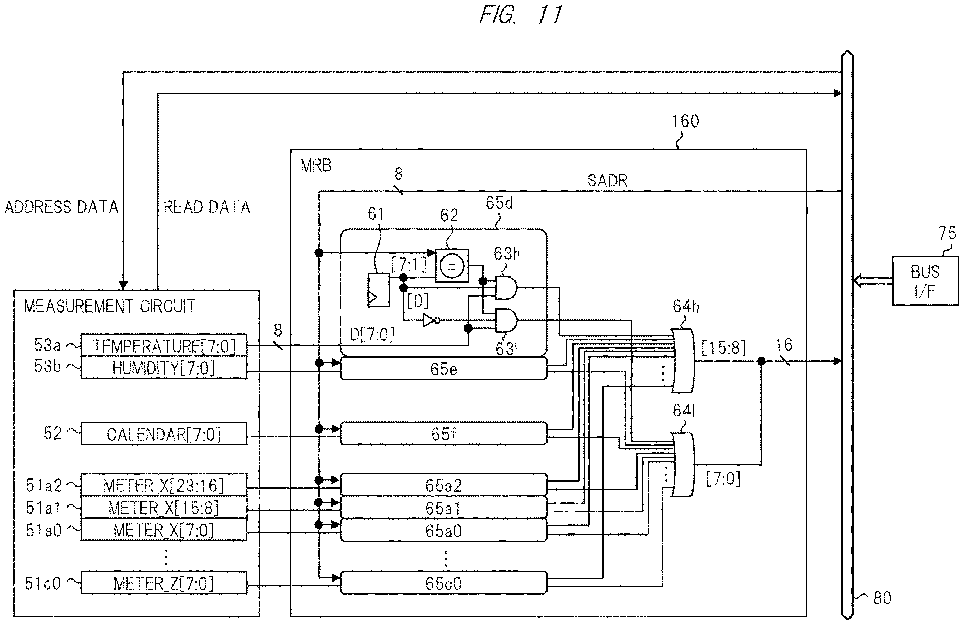

FIG. 11 is a diagram showing a configuration example of a mirror register buffer according to Embodiment 2 of the present invention. The mirror register buffer 160 of FIG. 11 has a configuration in which the buffer circuit 66, the interrupt setting register 68, and the data write control circuit 69 are deleted from the mirror register buffer 60 of FIG. 3.

The mirror register buffer 160 is accessed, for example, from the processor 10 or DMA/DTC controller 20, and selected address SADR from the processor 10 or DMA/DTC controller 20 is input through the second internal bus 80. Any mirror register address MADR is set in advance in the address setting registers 61 in the plurality of address providing circuits 65 so as to be convenient for data transfers, data organizing, and the like.

The mirror register buffer 160 compares the mirror register address MADR held by the address setting register 61 with the selected address SADR inputted through the buses in the respective address assigning circuits 65. Then, the data is outputted from the register corresponding to the address assigning circuit 65 in which the mirror register address MADR and the selected address SADR coincide with each other. The output data can be transferred to various locations via the second internal bus 80. That is, the transfer destination is not limited to the main memory 30.

According to this embodiment, the organized data is output from the mirror register buffer 160 to the bus. According to this configuration, even when the processor 10 or DMA/DTC controller 20 or the like is used, it is possible to reduce the time required for data transfer and data reduction.

## Claims

1. A semiconductor device comprising:
a processor (10);
a memory (30);
an external interface (40);
a plurality of registers (51, 52, 53) for storing data received by the external interface (40), the data stored in the registers (51, 52, 53) being given a predetermined address per register;
a mirror register buffer (60); and
an internal bus (70, 80) connected to the processor (10), the memory (30), the external interface (40), the registers (51, 52, 53), and the mirror register buffer (60),
wherein the registers (51, 52, 53) are configured to output the data directly to the mirror register buffer (60) without passing through the internal bus (70, 80), and
wherein the mirror register buffer (60; 160) is configured to set addresses to the data input from the registers (51, 52, 53), the addresses being different from the addresses assigned to the registers (51, 52, 53), and transfer the data directly to the memory (30) without passing through the internal bus (70, 80),
wherein the mirror register buffer (60) is configured to set the addresses by making a grouping of the data input from the plurality of registers (51, 52, 53) while giving a same group address and consecutive addresses to a plurality of items of the data.

2. The semiconductor device according to claim 1,
the mirror register buffer (60) includes a buffer circuit (66) that is configured to temporarily hold the data when transfer of the data to the memory (30) will conflict with an access via the internal bus (70, 80).

3. The semiconductor device according to claim 1 or 2,
wherein the addresses of the plurality of registers (51, 52, 53) before the grouping include those that are discontinuous.

4. The semiconductor device according to any one of claims 1 to 3,
wherein, when an external event occurs, the mirror register buffer (60) is configured to select a group corresponding to the external event, and transfer data belonging to the selected group to the memory (30).

5. The semiconductor device according to claim 4,
wherein the external event is a reception of an interrupt.

6. The semiconductor device according to claim 4,
wherein the external event is a reception of server log data.

## Patentansprüche

1. Halbleitervorrichtung, umfassend:
einen Prozessor (10);
einen Speicher (30);
eine externe Schnittstelle (40);
eine Vielzahl von Registern (51, 52, 53) zum Speichern von durch die externe Schnittstelle (40) empfangenen Daten, wobei für die in den Registern (51, 52, 53) gespeicherten Daten eine vorbestimmte Adresse pro Register festgelegt ist;
einen Spiegelregisterpuffer (60); und
einen internen Bus (70, 80), der mit dem Prozessor (10), dem Speicher (30), der externen Schnittstelle (40), den Registern (51, 52, 53) und dem Spiegelregisterpuffer (60) verbunden ist,
wobei die Register (51, 52, 53) konfiguriert sind, um die Daten direkt zum Spiegelregisterpuffer (60) auszugeben, ohne sie durch den internen Bus (70, 80) zu führen, und
wobei der Spiegelregisterpuffer (60; 160) konfiguriert ist, um zu den von den Registern (51, 52, 53) eingegebenen Daten Adressen einzustellen, wobei die Adressen unterschiedlich von den Adressen sind, die den Registern (51, 52, 53) zugeordnet sind, und um die Daten direkt zum Speicher (30) zu transferieren, ohne sie durch den internen Bus (70, 80) zu führen,
wobei der Spiegelregisterpuffer (60) konfiguriert ist, um die Adressen durch Herstellen einer Gruppierung der von der Vielzahl von Registern (51, 52, 53) eingegebenen Daten einzustellen, während für eine Vielzahl von Elementen der Daten eine selbe Gruppenadresse und fortlaufende Adressen festgelegt werden.

2. Halbleitervorrichtung nach Anspruch 1,
wobei der Spiegelregisterpuffer (60) eine Pufferschaltung (66) enthält, die konfiguriert ist, um die Daten temporär zu halten, wenn ein Transfer der Daten zum Speicher (30) mit einem Zugriff über den internen Bus (70, 80) kollidieren wird.

3. Halbleitervorrichtung nach Anspruch 1 oder 2,
wobei die Adressen der Vielzahl von Registern (51, 52, 53) vor dem Gruppieren diejenigen enthalten, die diskontinuierlich sind.

4. Halbleitervorrichtung nach einem der Ansprüche 1 bis 3,
wobei der Spiegelregisterpuffer (60) konfiguriert ist, um dann, wenn ein externes Ereignis auftritt, ein Gruppe entsprechend dem externen Ereignis auszuwählen und zu der ausgewählten Gruppe gehörende Daten zum Speicher (30) zu transferieren.

5. Halbleitervorrichtung nach Anspruch 4,
wobei das externe Ereignis ein Empfang einer Unterbrechung ist.

6. Halbleitervorrichtung nach Anspruch 4,
wobei das externe Ereignis ein Empfang von Server-Protokolldaten ist.

## Revendications

1. Un dispositif semi-conducteur comprenant :
un processeur (10);
une mémoire (30) ;
une interface externe (40) ;
une pluralité de registres (51, 52, 53) pour stocker des données reçues par l'interface externe (40), les données stockées dans les registres (51, 52, 53) se voyant attribuer une adresse prédéterminée par registre ;
un tampon de registre miroir (60) ; et
un bus interne (70, 80) connecté au processeur (10), à la mémoire (30), à l'interface externe (40), aux registres (51, 52, 53) et au tampon de registre miroir (60),
les registres (51, 52, 53) étant configurés pour délivrer les données directement au tampon de registre miroir (60) sans passer par le bus interne (70, 80), et
le tampon de registre miroir (60 ; 160) étant configuré pour définir des adresses pour les données entrées à partir des registres (51, 52, 53), les adresses étant différentes des adresses attribuées aux registres (51, 52, 53), et pour transférer les données directement à la mémoire (30) sans passer par le bus interne (70, 80),
le tampon de registre miroir (60) étant configuré pour définir les adresses en effectuant un regroupement des données entrées à partir de la pluralité de registres (51, 52, 53) tout en attribuant une même adresse de groupe et des adresses consécutives à une pluralité d'éléments de données.

2. Le dispositif semi-conducteur selon la revendication 1,
le tampon de registre miroir (60) comprend un circuit tampon (66) qui est configuré pour conserver temporairement les données lorsque le transfert des données vers la mémoire (30) entrera en conflit avec un accès via le bus interne (70, 80).

3. Le dispositif semi-conducteur selon la revendication 1 ou la revendication 2,
dans lequel les adresses de la pluralité de registres (51, 52, 53) avant le regroupement comprennent celles qui sont discontinues.

4. Le dispositif semi-conducteur selon l'une quelconque des revendications 1 à 3,
dans lequel, lorsqu'un événement externe se produit, le tampon de registre miroir (60) est configuré pour sélectionner un groupe correspondant à l'événement externe, et transférer des données appartenant au groupe sélectionné vers la mémoire (30).

5. Le dispositif semi-conducteur selon la revendication 4,
dans lequel l'événement externe est une réception d'une interruption.

6. Le dispositif semi-conducteur selon la revendication 4,
dans lequel l'événement externe est une réception de données de journal de serveur.
